# FASCICULE DE BREVET EUROPEEN

(11) **EP 2 669 560 B1**
(45) Date de publication et mention de la délivrance du brevet: **18.02.2015**
(21) Numéro de dépôt: 13169434.1
(22) Date de dépôt: 28.05.2013
(51) Int. Cl.: F16K 39/02, F16L 37/32

(54) **Dispositif de décharge et de purge, embout de raccord et raccord comprenant un tel dispositif**
Vorrichtung zur Entlastung und zum Ablassen, Anschlusstrichter und Anschluss, der eine solche Vorrichtung umfasst
Discharge and draining device, fitting end and fitting including such a device

(30) Priorité: 29.05.2012 FR 1254934
(43) Date de publication de la demande: 04.12.2013
(73) Titulaire: STÄUBLI FAVERGES, 74210 Faverges (FR)
(72) Inventeur: Tiberghien, Alain-Christophe, 74320 Sevrier (FR); Durieux, Christophe, 73200 Gilly sur Isere (FR); Mayer, Romain, 73400 Ugine (FR)
(74) Mandataire: Myon, Gérard Jean-Pierre

(56) Documents cités:
- WO-A1-82/01929
- US-A- 5 107 890

## Description

La présente invention concerne un dispositif de décharge et de purge comprenant une soupape ou un piston d'actionnement de soupape, adapté pour limiter la circulation d'un fluide occupant le volume intérieur d'un embout de raccord relié à une canalisation et permettre l'abaissement de la pression résiduelle de ce fluide à l'accouplement. L'invention concerne également un embout de raccord comprenant un tel dispositif. L'invention concerne également un raccord comprenant un embout de raccord mâle, un embout de raccord femelle et au moins un tel dispositif. Le domaine de l'invention est celui des connecteurs pour la jonction amovible de canalisations dans lesquelles circulent des fluides gazeux et/ou liquides sous pression.

Un raccord comprend deux embouts de raccords, respectivement mâle et femelle, qui comprennent chacun une veine fluide et peuvent être raccordés l'un à l'autre pour former un circuit de transport de fluide. Une soupape mobile est généralement disposée au niveau de l'interface de raccord entre les deux embouts, afin de limiter ou permettre la circulation du fluide de l'un à l'autre par ouverture et fermeture du circuit de fluide. Lorsque la soupape est maintenue en contact étanche contre un élément d'étanchéité du raccord, notamment sous l'action d'un ressort et/ou par pression du fluide, le circuit est fermé. Lorsque la soupape est écartée de l'élément d'étanchéité, le circuit est ouvert.

Il est connu des soupapes intégrant des systèmes de purge, prévus pour aider un opérateur à vaincre les efforts d'accouplement dans le raccord, liés à la pression résiduelle sur les sections de raccord. Un piston est disposé dans une enceinte intérieure de la soupape débouchant sur sa face avant et maintient le circuit fermé de manière étanche, tant que ce piston n'est pas repoussé dans l'enceinte sous l'action d'un organe extérieur à la soupape. Ce piston permet d'équilibrer la pression du circuit par rapport à la pression ambiante, facilitant ainsi l'accouplement des embouts mâles et femelles.

Il est par ailleurs connu des soupapes intégrant des systèmes automatiques de décharge, tels que des clapets assurant une fonction de limiteur, par exemple un clapet à bille dans US-A-5 107 890. Le clapet permet d'évacuer de petites quantités de fluide lorsque l'environnement du raccord fait monter la pression du fluide dans le circuit, du fait d'une augmentation de température ou de pression extérieure, ou de la compression mécanique d'un volume de fluide. Le clapet garantit constamment et automatiquement que la pression du fluide ne dépasse par un niveau prédéterminé, ce qui risquerait d'endommager le raccord et de dégrader son fonctionnement.

En outre, dans le cas d'applications particulières telles que le refroidissement d'un ensemble de composants électroniques par plaque de refroidissement, le raccordement des circuits sous pressions variables se distingue par la complexité de ses contraintes. Des systèmes distincts permettent partiellement de répondre aux problématiques de purge de circuit et de limitation de montée en pression, mais aucun ne résout intégralement les problèmes d'accouplement manuel de circuit en pression, d'éjection de joints à l'ouverture des soupapes, d'incertitude sur les conditions exactes d'ouverture du circuit, d'encombrement des systèmes de raccord, voire d'endommagement du raccord des suites de la montée en pression du circuit.

WO 82/01929 divulge un autre dispositif connu.

Le but de la présente invention est de proposer un dispositif de décharge et de purge et des moyens de raccord améliorés.

A cet effet, l'invention a pour objet un dispositif de décharge et de purge, adapté pour limiter la pression d'un fluide occupant le volume intérieur d'un embout de raccord relié à une canalisation et permettre l'abaissement de la pression résiduelle de ce fluide à l'accouplement, le dispositif comprenant :
- une soupape ou un piston d'actionnement de soupape,
- une enceinte intérieure débouchant sur une face avant de la soupape ou du piston d'actionnement de soupape, cette face avant étant destinée à coopérer avec un piston d'actionnement de soupape ou une soupape d'un embout de raccord complémentaire, et
- un obturateur mobile en translation dans l'enceinte suivant un axe central entre :
   - une position fermée où l'obturateur obture la face avant de l'enceinte au niveau d'une première zone d'étanchéité définissant une première section d'étanchéité située du côté de la face avant et
   - une position ouverte où l'obturateur n'obture plus la face avant.
Le dispositif est caractérisé en ce qu'il comprend également :
- une première chambre définie lorsque l'obturateur est dans sa position fermée, entre des parois de l'enceinte, l'obturateur, la première zone d'étanchéité et une deuxième zone d'étanchéité définissant une seconde section d'étanchéité située à l'opposé de la face avant par rapport à la première zone d'étanchéité,
- un passage de communication entre cette première chambre et le volume intérieur de l'embout de raccord,
- des moyens de rappel de l'obturateur vers sa position fermée, et
- une seconde chambre définie entre des parois de l'enceinte, la deuxième zone d'étanchéité et l'obturateur, cette deuxième chambre étant isolée du volume intérieur de l'embout de raccord et de la première chambre,
et en ce que la première section d'étanchéité est plus petite que la seconde section d'étanchéité.

Ainsi l'invention permet à la fois une limitation automatique de la montée en pression du circuit de fluide et un équilibrage volontaire de la pression du fluide dans le raccord lors de la connexion entre les embouts. Le dispositif de décharge et de purge selon l'invention est compact, fiable, pratique et ses conditions de fonctionnement sont bien maîtrisées. La soupape ou le piston d'actionnement de soupape double fonction permet le remplissage et la vidange d'un circuit de fluide, notamment d'un circuit de liquide de refroidissement de moule, plaque ou tout autre dispositif, tout en améliorant la manoeuvre et la sécurité de l'installation.

Selon d'autres caractéristiques avantageuses de l'invention, prises isolément ou en combinaison :
- L'obturateur comprend au moins un canal débouchant de la partie avant de l'obturateur et s'étendant à travers l'obturateur entre la seconde chambre et l'extérieur de l'obturateur.
- L'obturateur comporte deux canaux débouchant de la partie avant de l'obturateur radialement à l'axe central et s'étendant entre la seconde chambre et l'extérieur de l'obturateur.
- La première zone d'étanchéité comporte des moyens d'étanchéité qui sont fixes par rapport à la soupape ou au piston d'actionnement de soupape lorsque l'obturateur est mobile dans l'enceinte.
- Une surface externe tronconique de l'obturateur est maintenue en contact étanche contre les moyens d'étanchéité dans la position fermée de l'obturateur.
- Les moyens d'étanchéité sont fixés par adhérence à la soupape ou au piston d'actionnement de soupape.
- Une surface externe cylindrique de l'obturateur est maintenue en contact étanche radialement à l'axe central contre les moyens d'étanchéité dans la position fermée de l'obturateur.
- Les moyens d'étanchéité sont disposés dans une rainure radiale centrée sur l'axe central.
- Les moyens d'étanchéité comprennent un joint torique.
- Le dispositif comprend un chapeau vissé dans une partie taraudée de l'enceinte au niveau de la face avant.
- La première zone d'étanchéité comporte des moyens d'étanchéité solidaires du chapeau.
- Les moyens de rappel de l'obturateur disposés dans la seconde chambre comprennent un unique ressort ayant une première extrémité en appui contre l'obturateur et une deuxième extrémité en appui contre une paroi de l'enceinte.

L'invention a également pour objet un embout de raccord adapté pour la circulation de fluides sous pression, cet embout de raccord étant configuré comme un embout mâle ou femelle et adapté pour s'accoupler avec un autre embout de raccord complémentaire, inversement mâle ou femelle. L'embout de raccord est équipé d'un dispositif de décharge et de purge tel que mentionné ci-dessus.

L'invention a également pour objet un raccord adapté pour la circulation de fluides sous pression, comprenant un embout de raccord femelle relié à une première canalisation et un embout de raccord mâle relié à une deuxième canalisation. Au moins un embout de raccord parmi l'embout de raccord femelle et l'embout de raccord mâle est équipé d'un dispositif de décharge et de purge tel que mentionné ci-dessus.

L'invention sera mieux comprise à la lecture de la description qui va suivre, donnée uniquement à titre d'exemple non limitatif et faite en référence aux dessins annexés sur lesquels :
- la figure 1 est une coupe axiale d'un raccord conforme à l'invention, en configuration désaccouplée, ce raccord comprenant un embout de raccord conforme à l'invention, muni d'un dispositif de décharge et de purge du type soupape conforme à l'invention, cet embout de raccord étant configuré comme un embout femelle et adapté pour recevoir un embout mâle muni d'un piston d'actionnement de la soupape ;
- la figure 2 est une vue à plus grande échelle du détail Il à la figure 1 , montrant la soupape incluant un obturateur en position fermée ;
- la figure 3 est une vue analogue à la figure 2, montrant la soupape avec l'obturateur en position ouverte du fait d'une surpression dans le circuit de fluide de l'embout femelle ;
- la figure 4 est une vue analogue aux figures 2 et 3, à une échelle légèrement inférieure, montrant le raccord en cours d'accouplement, avec l'obturateur en position ouverte du fait de l'appui d'un piston équipant l'embout mâle sur une partie avant de l'obturateur mobile dans la soupape ;
- la figure 5 est une vue à une autre échelle, montrant le raccord dans une configuration accouplée, avec l'obturateur en position ouverte ;
- la figure 6 est une vue à plus grande échelle du détail VI à la figure 5, montrant la soupape avec l'obturateur en position ouverte ;
- la figure 7 est une vue analogue à la figure 2, à plus petite échelle, d'un deuxième mode de réalisation d'un embout de raccord et d'une soupape conformes à l'invention ;
- la figure 8 est une vue analogue à la figure 7 d'un troisième mode de réalisation d'un embout de raccord et d'une soupape conformes à l'invention ;
- la figure 9 est une vue partielle analogue à la figure 1, à une échelle légèrement supérieure, d'un quatrième mode de réalisation d'un raccord, d'un embout de raccord et d'un dispositif de décharge et de purge conformes à l'invention, le dispositif étant du type piston d'actionnement de soupape et équipant l'embout mâle au lieu de l'embout femelle du raccord ; et
- la figure 10 est une vue analogue à la figure 6, à une échelle légèrement inférieure, d'un cinquième mode de réalisation d'un raccord conforme à l'invention, l'embout femelle et l'embout mâle étant chacun équipé d'un dispositif du type soupape ou piston d'actionnement de soupape conforme à l'invention.

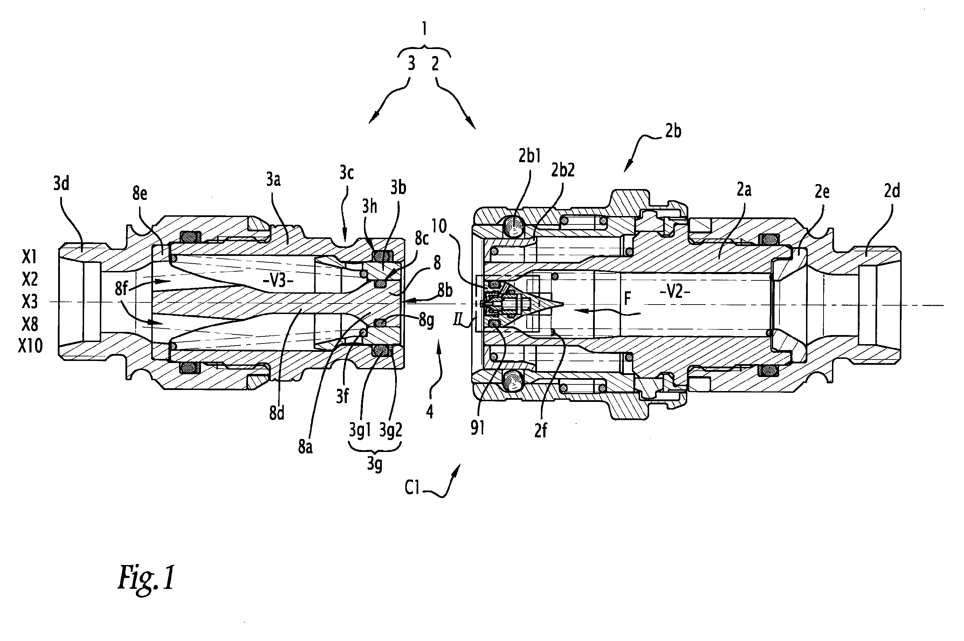

Sur les figures 1 à 6 est représenté un raccord 1 conforme à l'invention.

Ce raccord 1 est constitué par un embout de raccord femelle 2, également conforme à l'invention, et par un embout de raccord mâle 3. L'embout femelle 2 est équipé d'une soupape 10 formant un dispositif de décharge et de purge également conforme à l'invention. Par la suite, pour chacun des embouts 2 et 3, on définit un côté avant 4 correspondant à la zone d'interface ou zone de raccord.

Comme montré à la figure 1, l'embout femelle 2 comprend un corps principal 2a centré sur un axe longitudinal X2, un mécanisme 2b de verrouillage incluant notamment des billes 2b1 et une bague 2b2, une partie arrière 2d adaptée pour être raccordée à une canalisation, un organe d'appui arrière 2e interposé de manière fixe entre le corps 2a et la partie 2d suivant l'axe X2, ainsi qu'un ressort 2f disposé en appui arrière contre l'organe 2e et en appui avant contre le dispositif de soupape 10 dans le corps 2a. L'embout 2 inclut un volume intérieur V2 qui est délimité dans le corps 2a, la partie 2d et l'organe 2e. Dans ce volume intérieur V2 sont logés le ressort 2f et le dispositif de soupape 10. Ce volume intérieur V2 est prévu pour recevoir un fluide F lorsque la partie 2d est raccordée à la canalisation. Le dispositif de soupape 10 est mobile dans le volume intérieur V2 suivant un axe de soupape X10 confondu avec l'axe X2.

L'embout mâle 3 comprend un corps principal 3a centré sur un axe longitudinal X3, un tiroir 3b disposé dans le corps 3a du coté avant 4, un piston 8 agencé en partie dans le tiroir 3b, une rainure externe annulaire 3c ménagée dans le corps 3a et prévue pour coopérer avec le mécanisme 2b, une partie arrière 3d adaptée pour être raccordée à une canalisation, un ressort 3f disposé en appui arrière contre une base arrière 8e du piston 8 et en appui avant contre le tiroir 3b, ainsi que des moyens d'étanchéité 3g agencés dans une rainure interne annulaire 3h ménagée dans le corps 3a. Les moyens d'étanchéité 3g comprennent plus précisément un joint annulaire 3g1 et une bague anti-extrusion 3g2, qui entourent le tiroir 3b dans la configuration désaccouplée de la figure 1. La bague anti-extrusion 3g2 permet principalement de limiter l'éjection du joint 3g1 en configuration accouplée, tandis que l'éjection du joint 3g1 en configuration désaccouplée est limitée par le dispositif selon l'invention.

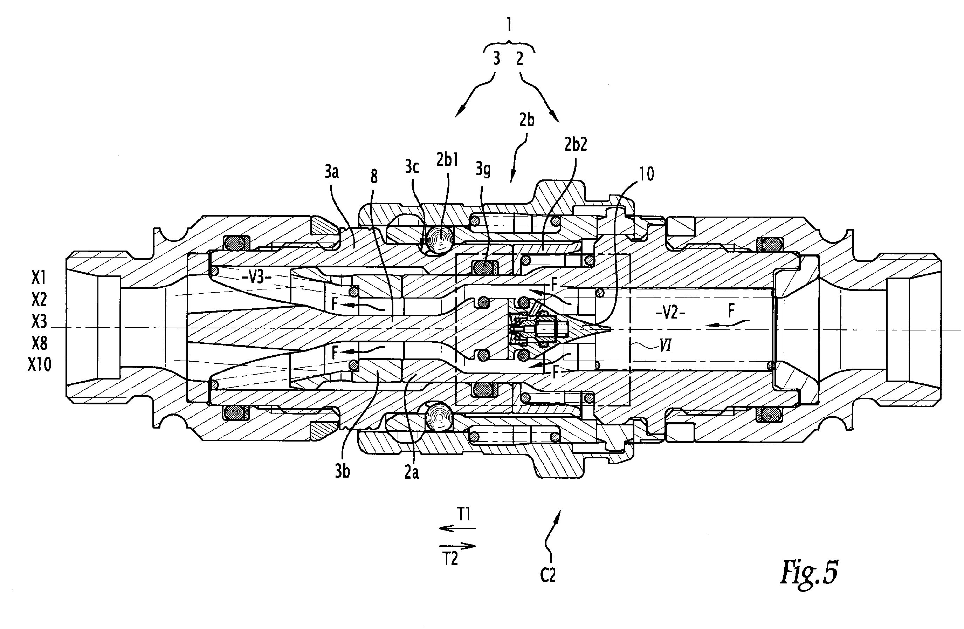

Le piston 8 s'étend suivant un axe longitudinal X8 et est fixé dans l'embout 3. Le piston 8 comprend une tête avant 8a muni d'une face d'appui avant 8b, une rainure annulaire externe 8c recevant un joint d'étanchéité annulaire 8g, une tige centrale 8d, une base arrière 8e interposée de manière fixe entre le corps 3a et la partie arrière 3d, ainsi que quatre conduits 8f répartis autour de l'axe X8 et traversant la base arrière 8e. Lorsque le raccord 1 est en configuration désaccouplée, comme montré à la figure 1, le joint 8g assure l'étanchéité entre la tête 8a et le tiroir 3b. L'embout 3 inclut un volume intérieur V3 qui est délimité dans le corps 3a, la partie 3d et les conduits 8f. Dans ce volume intérieur V3 sont logés le ressort 3f, le tiroir 3b, la tige 8d et la tête 8a du piston 8. Ce volume intérieur V3 est prévu pour recevoir le fluide F lorsque l'embout 3 est accouplé à l'embout 2, dans une configuration accouplée du raccord 1 détaillée ci-après en référence à la figure 5.

Comme montré aux figures 1 et 5, les embouts 2 et 3 peuvent être accouplés et verrouillés en configuration accouplée par coopération du mécanisme 2b de l'embout 2, en particulier des billes 2b1, avec la rainure 3c de l'embout 2. En alternative, les embouts 2 et 3 peuvent être configurés pour être accouplés par vissage ou par tout système d'accouplement adapté à la présente application. Lorsque les embouts 2 et 3 sont accouplés, autrement dit lorsque le raccord 1 est dans la configuration accouplée, les axes X2, X3, X8 et X10 sont confondus avec un axe longitudinal X1 du raccord 1, comme montré à la figure 5.

A titre d'exemple, le fluide F parcourant le circuit de fluide, en particulier les volumes intérieurs V2 et V3, peut être un liquide de refroidissement. Ce fluide peut parcourir l'installation et des plaques de refroidissement équipées du raccord 1. La température de ce liquide peut être de l'ordre de 10°C en entrée de circuit et de l'ordre de 50°C en sortie. En pratique, l'opérateur doit pouvoir déconnecter les plaques et tubes du système d'alimentation et de collecte du liquide transporté dans l'installation. Aux extrémités des circuits de circulation de fluides internes aux plaques, un embout de raccord comprend une soupape maintenant alors les circuits fermés.

Lorsqu'une installation qui n'est pas équipée de dispositifs 10 selon l'invention est déconnectée, plusieurs problèmes sont susceptibles de se poser. La pression augmente dans le circuit, généralement en raison de l'augmentation de température de l'installation, ce qui entraîne un risque de surpression qui peut endommager l'installation. Les conditions de montée en pression du circuit peuvent empêcher l'opérateur de reconnecter le tuyau aux circuits d'entrée et de sortie, avec un effort d'accouplement supérieur aux efforts cumulés du ressort 2f et de la pression du circuit sur la soupape, à cause d'une pression résiduelle trop importante. Les joints d'étanchéité équipant la soupape peuvent être éjectés sous l'effet de l'ouverture brutale du circuit, lors de l'accouplement entre les embouts de raccord mâle et femelle. Par ailleurs, les paliers de pression au-delà duquel le circuit doit s'ouvrir pour des raisons de sécurité, ou parce qu'un opérateur souhaite ouvrir le circuit pour l'accouplement du raccord, sont généralement mal maîtrisés. En outre, on vise à intégrer les fonctions de limiteur et de purgeur dans un système compact et fiable.

Le dispositif 10 selon l'invention, du type soupape sur les figures 1 à 6, permet de résoudre les problèmes précités.

Selon l'invention, le dispositif de soupape 10 assure une double fonction de limiteur et purgeur. Le dispositif de soupape 10 est mobile en translation dans l'embout de raccord femelle 2, plus précisément dans le volume intérieur V2 traversé par le fluide F2, dans un sens de translation T1 dirigé vers l'avant 4 ou dans un sens de translation T2 dirigé vers l'arrière. Le dispositif de soupape 10 comprend des pattes arrières 16, contre lesquelles le ressort 2f vient en appui. Le ressort 2f tend à repousser le dispositif de soupape 10 en translation T1 vers l'avant 4, de sorte qu'une surface d'appui avant 18 des pattes 16 vient en butée contre le corps 2a de l'embout 2, comme montré aux figures 1 à 4.

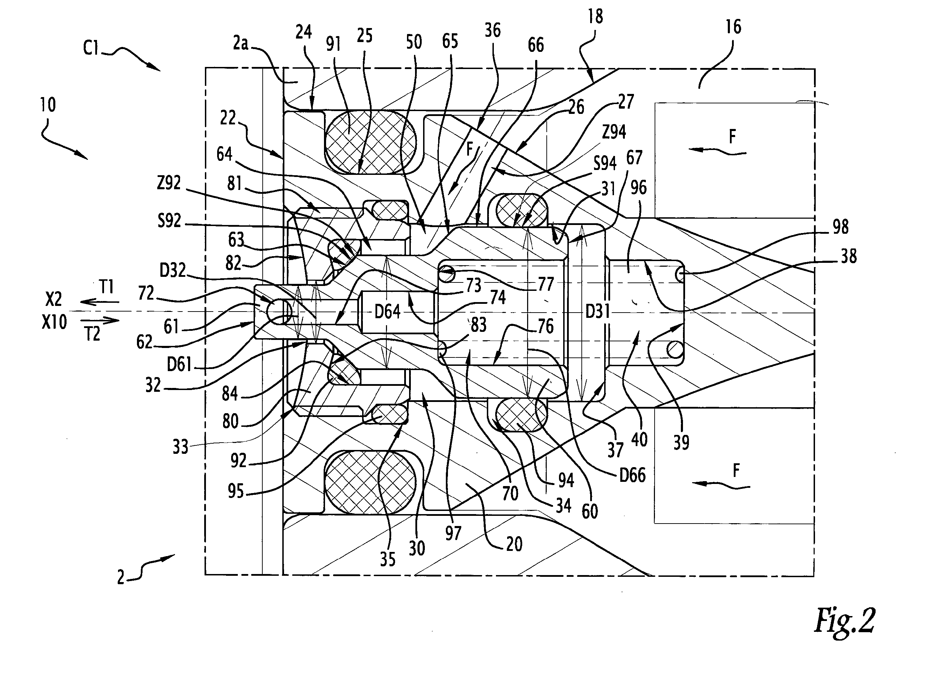

Comme montré à la figure 2, le dispositif de soupape 10 comprend également un corps 20, une enceinte 30, une première chambre 50 dite chambre supérieure ou avant, une seconde chambre 40 dite chambre inférieure ou arrière, un obturateur 60 mobile dans l'enceinte 30 et un chapeau 80 obturant l'enceinte 30 du côté avant 4. Le dispositif de soupape 10 comprend également des moyens d'étanchéité 91, 92, 94 et 95, ainsi que des moyens élastiquement déformables 96. En pratique, les moyens d'étanchéité sont de préférence conformés comme des joints annulaires.

Le corps de soupape 20 est monobloc et s'étend suivant l'axe central X10 du dispositif de soupape 10. Le corps 20 comprend une face avant 22 qui s'étend radialement à l'axe X10 selon un profil annulaire, une surface cylindrique externe 24 centrée sur l'axe X10 et montée coulissante dans le corps 2a, une rainure annulaire externe 25 débouchant au niveau de la surface 24, une surface arrière 26 de forme sensiblement tronconique, ainsi qu'un conduit 27 reliant la surface 26 à l'enceinte 30 ménagée dans le corps 20. Les pattes 16 sont raccordées à la surface arrière 26 du corps 20 et sont espacées autour de l'axe X10. Ainsi, le fluide F peut s'écouler entre les pattes 16 vers l'avant 4, jusqu'à la surface 26 et les moyens d'étanchéité 91, qui sont conformés comme un joint annulaire.

En pratique, le joint 91 est logé dans la rainure 25, entre le corps de soupape 20 et le corps 2a de l'embout 2. Lorsque le dispositif de soupape 10 est en butée contre le corps 2a, le joint 91 assure l'étanchéité entre le dispositif de soupape 10 et le corps 2a, empêchant le passage de fluide F vers l'avant au niveau de la surface 24. Lorsque le dispositif de soupape 10 est mobile dans le volume intérieur V2, cette surface 24 constitue une surface de guidage en translation T1 ou T2 du corps de soupape 20 par rapport au corps 2a le long de l'axe X2, sur une partie du trajet.

L'enceinte 30 comprend une paroi interne cylindrique 31 qui est centrée sur l'axe X10 et présente un diamètre D31. L'enceinte 30 comporte un orifice avant 32 débouchant du côté avant 4 et un orifice arrière 36 débouchant du côté arrière. L'orifice 32 présente un diamètre D32 et est ménagé dans le chapeau 80, qui est lui-même vissé dans une partie taraudée 33 formée dans le corps 20 du côté avant 4. Le diamètre de la partie 33 est supérieur au diamètre D31. Sur l'exemple des figures, le diamètre D32 est d'environ un tiers du diamètre D31. L'orifice arrière 36 est situé à l'extrémité du conduit 27, au niveau de la surface 26. L'orifice 36 est ménagé derrière la surface 24 par rapport à la face avant 22. La section de passage de l'orifice 36 est supérieure ou du même ordre de grandeur que la section annulaire de passage de fluide (D32 moins D61). Ainsi, l'enceinte 30 et les orifices 32 et 36 sont adaptés à la circulation du fluide F, tout en permettant d'obtenir un dispositif de soupape 10 compact. En alternative, les dimensions des diamètres mentionnés ci-dessus peuvent être différentes sans sortir du cadre de l'invention.

L'enceinte 30 comporte également une rainure annulaire interne 34 ménagée au niveau de la paroi 31, ainsi qu'une rainure annulaire interne 35 ménagée entre la paroi 31 et la partie taraudée 33. Les rainures 34 et 35 reçoivent les moyens d'étanchéité 94 et 95, conformés comme des joints annulaires. Plus précisément, la rainure 34 reçoit le joint 94 réalisant l'étanchéité entre le corps 20 et l'obturateur 60, délimitant de manière étanche les chambres 40 et 50 dans l'enceinte 30, tandis que la rainure 35 reçoit le joint 95 réalisant l'étanchéité entre le chapeau 80 et le corps 20 lorsque le chapeau 80 est vissé dans la partie 33.

L'enceinte 30 comporte également une surface arrière 37, qui s'étend radialement à l'axe X10, présente un profil sensiblement annulaire et est raccordée à la paroi 31. Une surface cylindrique 38 s'étend depuis la surface 37 vers l'arrière et présente un diamètre inférieur au diamètre D31. L'enceinte 30 comporte une paroi arrière 39, qui s'étend radialement à l'axe X10, est tournée vers l'avant 4 et est raccordée à la surface 38. Les moyens 96 de rappel de l'obturateur 60, conformés comme des moyens élastiquement déformables tel un ressort sur l'exemple des figures, sont agencés dans l'enceinte 30, plus précisément dans la chambre 40. Le ressort 96 a une première extrémité 97 en appui avant contre l'obturateur 60 et une deuxième extrémité 98 en appui contre la paroi 39. En alternative, les moyens 96 peuvent comprendre une membrane ou tout autre élément de rappel adapté à la présente application.

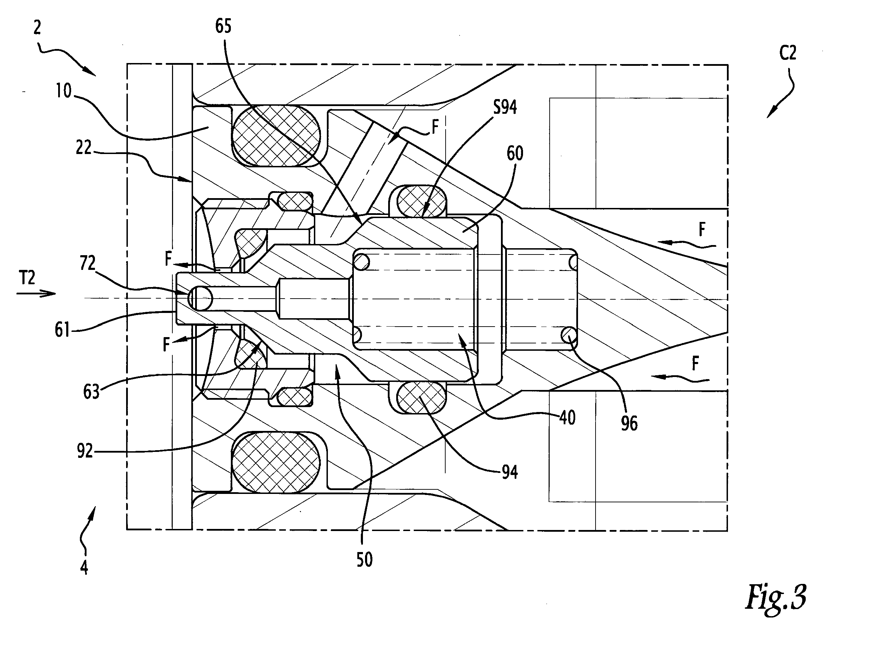

En pratique, le ressort 96 est apte, d'une part, à repousser automatiquement l'obturateur 60 en translation T1 vers l'avant 4 dans une position fermée C1 et, d'autre part, à autoriser une translation T2 de l'obturateur 60 vers l'arrière dans une position ouverte C2. La position fermée C1 est représentée aux figures 1 et 2, tandis que la position ouverte C2 est représentée aux figures 3 à 6.

Comme montré à la figure 2, l'obturateur 60 comprend, de l'avant 4 vers l'arrière : une partie avant cylindrique 61 présentant un diamètre D61 et munie d'une face avant plane 62, une première surface tronconique 63, une première surface cylindrique 64 de diamètre D64, une deuxième surface tronconique 65, une deuxième surface cylindrique 66 de diamètre D66, ainsi qu'une surface annulaire arrière 67. Le diamètre D66 est supérieur au diamètre D64 et inférieur au diamètre D31.

Dans le cadre de l'invention, le dispositif de soupape 10 comporte une première zone d'étanchéité Z92 de section S92 située du côté de la face avant 22 de l'enceinte 30 et une deuxième zone d'étanchéité Z94 de section S94 située à l'opposé de la face avant 22 par rapport à la première zone d'étanchéité Z92. La zone Z92 est définie au niveau du joint 92, tandis que la zone Z94 est définie au niveau du joint 94. Ces zones d'étanchéité Z92 et Z94 ont pour fonction de limiter le passage de fluide entre l'obturateur 60 et le corps 20 de soupape, et entre l'obturateur 60 et le chapeau 80.

En particulier, la section d'étanchéité S92 est délimitée entre le joint 92 et les surfaces 63 et 64 de l'obturateur 60. La section S92 est définie sur le profil tronconique 63 de l'obturateur 60 par un diamètre maximal D64 et un diamètre minimal supérieur au diamètre D61, comme montré notamment à la figure 2. Dans une réalisation possible, le diamètre D66 de section d'étanchéité S94 est par exemple de l'ordre de 8 mm tandis que le diamètre de la section d'étanchéité S92 est au plus égal au diamètre D64 de l'ordre de 5,4 mm pour garantir un différentiel de diamètres suffisant. La section S94 est définie par le diamètre D66 extérieur de la surface 66 de l'obturateur 60. Cette surface 66 est en contact étanche avec le joint 94, au niveau de la section d'étanchéité S94, quelle que soit la position de l'obturateur 60 dans l'enceinte 30. Le diamètre D61 est inférieur au diamètre D32.

Lorsque l'obturateur 60 est en position fermée C1, la partie avant 61 dépasse par l'orifice 32 au-delà de la face d'appui avant 22. Lorsque l'obturateur 60 est en position ouverte C2, la partie avant 61 rentre partiellement dans l'enceinte 30. Les chambres 40 et 50 présentent des volumes variables en fonction de la position de l'obturateur 60 dans l'enceinte 30.

L'obturateur 60 comprend également une cavité interne 70 qui s'étend suivant l'axe X10. La cavité 70 débouche vers l'arrière au niveau de la surface 67 et vers l'avant au niveau de deux canaux radiaux 72, ménagés dans la partie 61 de part et d'autre de l'axe X10, radialement à cet axe X10. La cavité 70 comprend une surface cylindrique interne 73 qui s'étend vers l'arrière depuis les canaux 72, puis une surface cylindrique interne 74 de plus grand diamètre que la surface 73, puis une surface cylindrique interne 76 de plus grand diamètre que la surface 74. La cavité 70 comporte également une surface annulaire 77, qui s'étend radialement à l'axe X10, est tournée vers l'arrière et est raccordée à la surface 76. L'extrémité 98 du ressort 96 prend appui contre cette surface 77, disposée en vis-à-vis de la paroi 39.

Le chapeau 80 comprend une surface externe filetée 81, une face avant 82 bombée vers l'arrière, une surface arrière convexe 83 et une surface cylindrique intérieure 84. La surface filetée 81 est adaptée pour coopérer avec la partie taraudée 33 du corps 20, de sorte que le chapeau 80 peut être vissé dans l'enceinte 30. L'orifice avant 32 de l'enceinte 30 est ménagé à travers le chapeau 80, entre la face 82 et la surface 83, suivant l'axe X10. Les surfaces 83 et 84 sont reliées l'une à l'autre dans la chambre 50, en direction de l'arrière, en formant un angle inférieur à 90° en section dans un plan incluant l'axe X10. Les moyens d'étanchéité 92, qui sont conformés comme un joint annulaire, sont disposés dans cet angle formé entre les surfaces 83 et 84.

En pratique, le joint 92 est solidaire du chapeau 80 auquel il peut être fixé par adhérence, par exemple par collage ou par surmoulage. Dans la position fermée C1 de l'obturateur 60 équipant le dispositif de soupape 10, la surface externe tronconique 63 de l'obturateur 60 est maintenue en contact étanche contre le joint 92, empêchant ainsi le passage de fluide F de la chambre 50 vers l'orifice avant 32. En passant de la position fermée C1 à la position ouverte C2, l'obturateur 60 et en particulier sa surface 63 s'écartent du joint 92, autorisant ainsi le passage de fluide F de la chambre 50 vers l'orifice 32. Comme la surface 63 est conique, la perte d'étanchéité est instantanée lorsque l'obturateur 60 s'écarte du joint 92, indépendamment de la course de l'obturateur 60 dans le sens de translation T2. Autrement dit, le contact ou l'absence de contact entre l'obturateur mobile 60 et le joint fixe 92 permettent de limiter ou permettre l'ouverture ou la fermeture du circuit de circulation de fluide F dans le dispositif de soupape 10, au niveau de la chambre 50.

La chambre 40 inclut le ressort 96 et est délimitée par l'enceinte 30, l'obturateur 60, la cavité 70 et le joint 94, du côté arrière de ce joint 94. La chambre 40 débouche du corps de soupape 20 au niveau des canaux 72, à l'extrémité avant de la cavité 70. Dans ces conditions, la cavité 70 et les canaux 72 sont adaptés, lorsque l'obturateur 60 équipant le dispositif de soupape 10 est en position fermée C1, pour maintenir la chambre 40 à une pression externe inférieure à la pression du fluide F pénétrant dans la chambre 50, notamment pour maintenir la chambre 40 à la pression ambiante. Avantageusement, les canaux 72 permettent de faire s'opposer les pressions distinctes des deux chambres 40 et 50 pour créer le différentiel de pression à l'équilibrage, en vue de la décharge automatique.

La chambre 50 inclut le joint 92 et est délimitée par l'enceinte 30, l'obturateur 60, le chapeau 80, le joint 92 et le joint 94, du côté avant de ce joint 94. La chambre 50 débouche en permanence du corps de soupape 20 au niveau de l'orifice arrière 36. En position fermée C1, la chambre 50 est obturée par le contact de l'obturateur 60 sur le joint 92, sous l'action du ressort 96. La chambre 50 est alors à la pression du fluide F dans le circuit, c'est-à-dire dans le volume intérieur V2. En position ouverte C2, l'obturateur 60 est écarté du joint 92 en s'opposant à l'action du ressort 96 et la chambre 50 communique avec l'orifice avant 32.

Dans le cadre de la présente invention, il existe deux façons de passer de la position fermée C1 à la position ouverte C2 de l'obturateur 60 et donc du circuit de fluide F, par translation T2 de l'obturateur 60 vers l'arrière : soit automatiquement sous l'action d'une surpression du fluide F, pénétrant par l'orifice arrière 36 dans la chambre 50, le fluide F exerçant alors une pression sur la surface tronconique 65 de l'obturateur 60 de manière à exercer une pression axiale sur l'obturateur 60 opposée et supérieure à la pression du ressort 96 maintenant l'obturateur 60 en position fermée C1, soit volontairement par appui sur la partie avant 61 de l'obturateur 60 au niveau de la face avant 22 de la soupape 10. Dans les deux cas, l'obturateur 60 est entraîné vers l'arrière dans le même sens T2. Tout en combinant avantageusement les deux fonctions, cela permet de simplifier la construction du dispositif de soupape 10. A défaut d'une des deux conditions décrites ci-dessus, l'obturateur 60 est ramené en translation T1 vers l'avant 4 contre le joint 92 sous l'action du ressort 96.

Sur les figures 1 et 2, le raccord 1 est en configuration désaccouplée. Dans le volume intérieur V2, la pression du circuit de fluide F et/ou l'action du ressort 2f maintient le dispositif de soupape 10 en position avancée contre le corps 2a, tandis que le ressort 96 maintient l'obturateur 60 en position avancée contre le joint 92. Le circuit de fluide F est donc fermé. Lorsque le raccord 1 est en configuration désaccouplée, une surpression est susceptible de se produire dans le circuit de fluide F, dans le volume intérieur V2 et donc dans la chambre 50. Le fluide F se comprime dans la chambre 50 et exerce une pression vers l'arrière sur la surface tronconique 65 de l'obturateur 60. Au-delà d'une surpression prédéterminée, également appelée pression de décharge, la force exercée par le fluide F pressurisé dépasse la force de rappel du ressort 96 et fait reculer l'obturateur 60 dans le sens de translation T2, comme montré à la figure 3. Ce recul provoque l'ouverture C2 du circuit, en annulant l'étanchéité au niveau de la zone Z92 de section S92, permettant ainsi une décharge contrôlée de fluide F à travers l'orifice avant 32. Lorsque la pression du fluide F redescend en dessous du seuil de pression de décharge, l'obturateur 60 revient en position avancée C1 de fermeture du dispositif de soupape 10 et du circuit, automatiquement sous l'action du ressort 96. L'étanchéité est alors retrouvée au niveau de la zone Z92 de section S92.

Au tarage du dispositif de purge et de décharge, on peut déterminer les conditions de recul de l'obturateur 60 par les choix appropriés d'un différentiel de diamètres de sections d'étanchéité S92 et S94 et des caractéristiques du ressort d'obturateur 96, en déterminant les seuils de pressions au-delà desquels une pression volontaire de l'opérateur ou une surpression interne vont respectivement permettre de purger ou décharger le circuit. Notamment en fonction du rapport des sections S92 et S94, on définit la surface d'obturateur sur laquelle la pression s'exerce en cas de surpression de fluide F2 dans la canalisation. Les caractéristiques mécaniques des moyens élastiques 96 couplées au différentiel de sections S92 et S94 permettent de connaître le seuil de pression au-delà duquel le dispositif 10 agit en fonction de décharge. Les efforts exercés par les moyens élastiques 96 permettent de déterminer les efforts à appliquer nécessairement sur l'obturateur 60 pour que le dispositif 10 réalise sa fonction de purge.

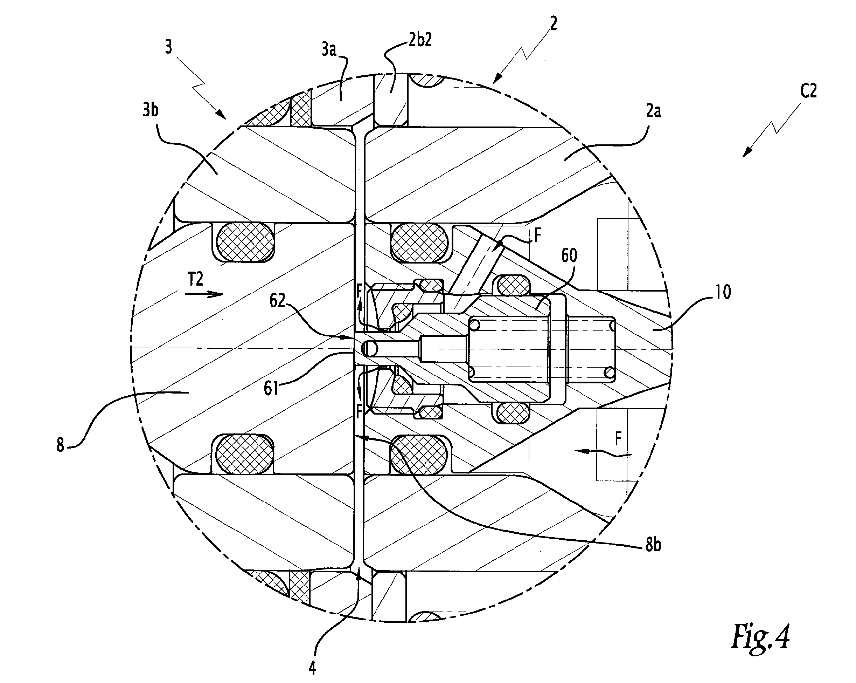

Sur la figure 4, le raccord 1 est en cours d'accouplement. L'opérateur se munit de l'embout de raccord mâle 3 complémentaire de l'embout de raccord femelle 2 et vient plaquer cet embout mâle 3 contre l'embout femelle 2. La face plane 8b du piston 8 vient alors prendre appui sur la partie avant 61 de l'obturateur 60, qui émerge au niveau de la face avant 22 du dispositif de soupape 10, pour faire reculer l'obturateur 60 dans le sens de translation T2. L'opérateur agit en s'opposant à la force du ressort 96 et force l'obturateur 60 à reculer, ce qui provoque une libération de la pression résiduelle du fluide F dans l'embout de raccord femelle 2 et purge le circuit. Lorsque la purge débute, un jeu entre les faces 8b et 22 permet l'écoulement du fluide F en fuite hors du raccord 1. De préférence, les faces 22 et 8b sont rayées ou rainurées pour favoriser cet écoulement.

A ce stade, on remarque que le profil de la paroi externe de l'obturateur 60, comprenant les surfaces 63, 64, 65 et 66, détermine le volume de la chambre 50 dans la position fermée C1, et donc la valeur seuil de surpression du fluide F translatant l'obturateur 60 depuis la position fermée C1 vers la position ouverte C2 du dispositif de soupape 10. En effet, c'est contre cette paroi externe que s'exerce la pression du fluide F permettant de faire reculer l'obturateur 60 en cas de surpression dans le volume intérieur V2 de l'embout 2.

En passant de la figure 4 à la figure 5, l'accouplement du raccord 1 se poursuit. Le circuit est purgé, l'obturateur 60 est maintenu en arrière et le dispositif de soupape 10 est maintenu en position ouverte C2. L'opérateur maintient et même augmente son effort axial d'accouplement, de sorte que l'embout femelle 2 repousse le tiroir 3b de l'embout mâle 3 et ouvre successivement les circuits des deux embouts de raccord. Le corps 3a de l'embout mâle 3 repousse la bague 2b2 de l'embout femelle 2, tandis que le corps 2a pénètre dans l'espace tubulaire délimité dans le corps 3a, en s'opposant à l'action des ressorts 2f et 3f.

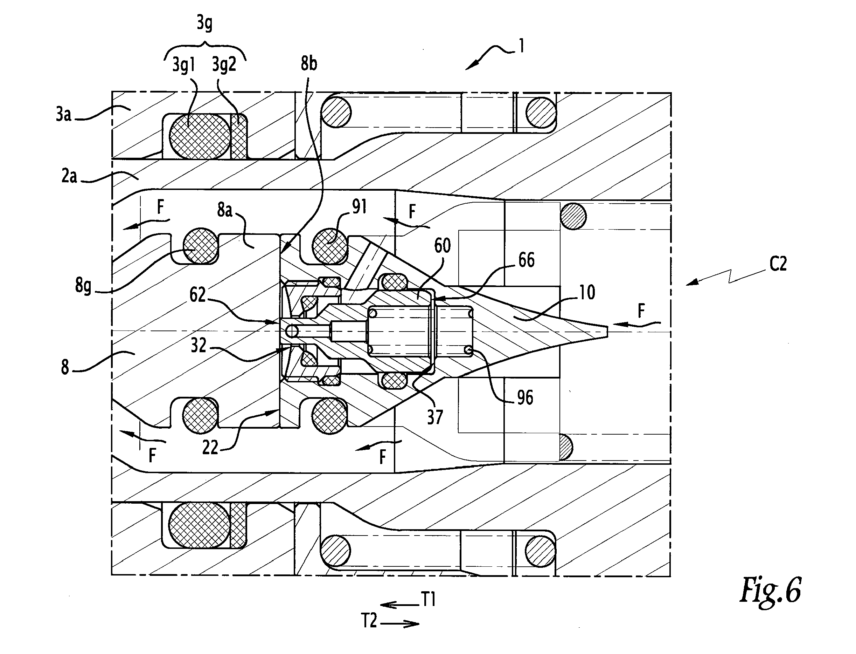

Sur les figures 5 et 6, le raccord 1 est en configuration accouplée et les deux veines fluide sont raccordées, permettant la circulation du fluide F de l'embout 2 vers l'embout 3. Le mécanisme 2b verrouille l'embout 2 sur l'embout 3, avec les billes 2b1 qui pénètrent et sont maintenues dans la rainure 3c. Les joints 8g et 91 ne sont plus maintenus contre leurs surfaces d'étanchéité et reprennent leur forme au repos dans leurs rainures respectives 8c et 25. Les ressorts 2f et 3f sont comprimés.

Lors de la manoeuvre de désaccouplement des deux embouts 2 et 3 du raccord 1, le mécanisme 2b est déverrouillé et les ressorts 2f et 3f repoussent les différents éléments de raccord dans leur position initiale. Les joints 91 et 8g reviennent se loger dans leurs embouts de raccord respectifs 2 et 3. L'obturateur 60 reprend ensuite sa position initiale sous l'action de son ressort de rappel 96. L'étanchéité des circuits à une pression maximale de décharge est retrouvée.

Ainsi, le dispositif de soupape 10 selon l'invention forme un limiteur purgeur compact et automatique, proposant la double fonction de décharge et de purge par coulissement dans le corps 20 d'un unique obturateur 60 dans une même direction T2 : ceci présentant l'avantage de ne nécessiter qu'une unique fermeture de circuit pour la réalisation de ces deux fonctions, de manière économique et fiable.

D'autres modes de réalisation de l'invention sont décrits ci-après. Certains éléments constitutifs de ces modes sont comparables à ceux du premier mode de réalisation et, dans un but de simplification, portent les mêmes références numériques. D'autres éléments constitutifs présentent un fonctionnement comparable, mais une structure différente, avec ceux du premier mode de réalisation et portent les mêmes références numériques augmentées respectivement de 100, 200, 300 ou 400 selon le mode.

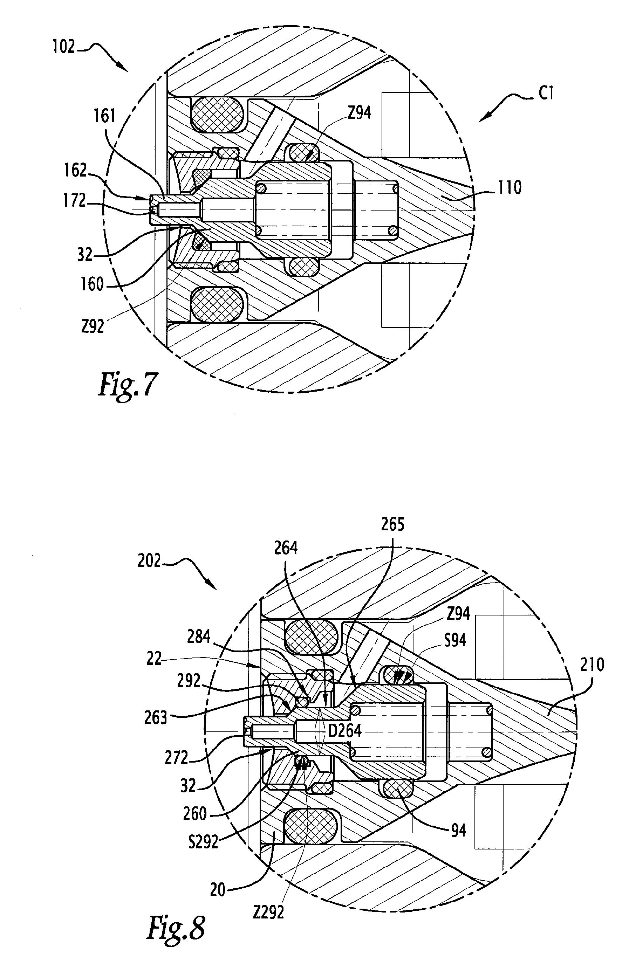

Sur la figure 7 est représenté un deuxième mode de réalisation d'un embout de raccord femelle 102 et d'un dispositif de soupape 110 conformes à l'invention

La principale différence avec le premier mode de réalisation est que la partie cylindrique avant 161 de l'obturateur 160 comporte un canal axial 172 débouchant suivant l'axe X10 au niveau de la face avant 162.

Sur la figure 8 est représenté un troisième mode de réalisation d'un embout de raccord femelle 202 et d'un dispositif de soupape 210 conformes à l'invention.

Les principales différences avec le premier mode de réalisation concernent l'obturateur 260 et le joint 292. Concernant son agencement dans le dispositif de soupape 210, le joint 292 est disposé dans une rainure radiale 284 centrée sur l'axe central X10 et solidaire du chapeau 280, lui-même vissé dans le corps 20 au niveau de la face avant 22. L'obturateur 260 comporte une surface tronconique 263 moins étendue que la surface 63 et une surface tronconique 265 plus étendue que la surface 65, de sorte que la surface 264 présente un diamètre inférieur à celui de la surface 64. Lorsque l'obturateur 260 est en position fermée C1, la surface 264 est positionnée en butée contre le chapeau 280 et est maintenue en contact étanche radialement à l'axe central X10 à l'intérieur du joint 292, au niveau de la section d'étanchéité S292. Ainsi, la détermination des conditions d'étanchéité entre l'obturateur 260 et le joint 292 est plus exacte, mais l'inertie du système augmente du fait de la course supplémentaire nécessaire pour faire reculer l'obturateur 260 et ainsi faire passer l'obturateur 260 de la position fermée C1 à la position ouverte C2.

En outre, on remarque que le dispositif de soupape 210 comprend un canal axial 272 identique au canal 172.

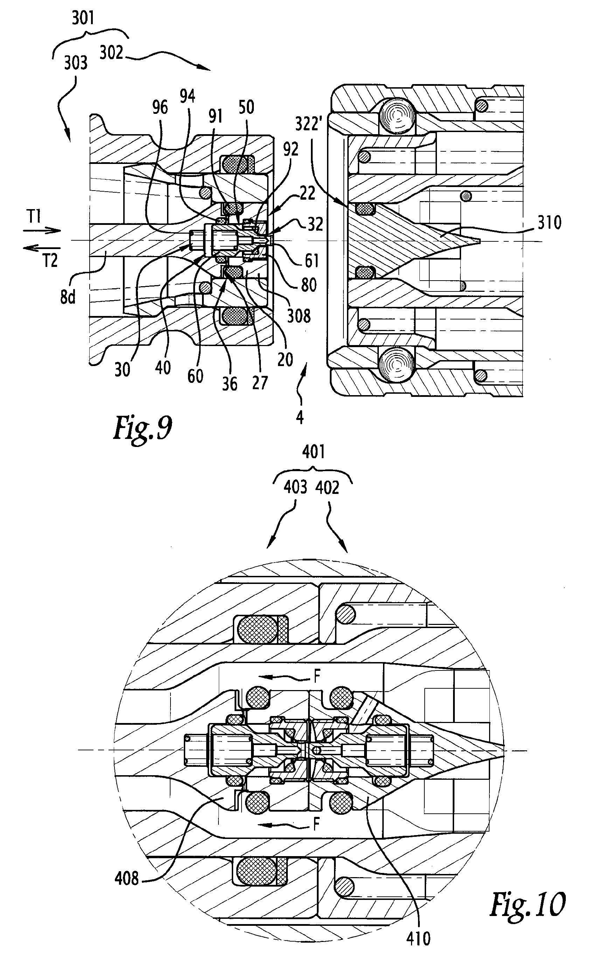

Sur la figure 9 est représenté un quatrième mode de réalisation d'un raccord 301, d'un embout de raccord mâle 303 et d'un dispositif de purge et de décharge 308 conformes à l'invention.

La principale différence avec le premier mode de réalisation est que le dispositif de purge et de décharge 308 est du type piston d'actionnement de soupape disposé dans l'embout de raccord mâle 303, et non du type soupape disposé dans l'embout de raccord femelle 302 du raccord 301.

Plus précisément, le dispositif 308 est intégré dans la tête du piston équipant l'embout 303, à l'extrémité avant 4 de la tige 8d. Le dispositif 308 comprend entre autres une enceinte 30, un orifice avant 32, un conduit arrière 27, un orifice arrière 36, des chambres 40 et 50, un obturateur 60, une partie cylindrique avant 61, un chapeau 80, des joints 92 et 94, ainsi qu'un ressort 96. Excepté les différences de construction, le dispositif de piston 308 assure à la fois les fonctions limiteur et purgeur, de manière comparable au dispositif de soupape 10.

Pour sa part, la soupape 310 équipant l'embout femelle 2 comprend une face avant 322' d'appui sur la partie 61 du piston 308 lors de l'accouplement du raccord 301.

Sur la figure 10 est représenté un cinquième mode de réalisation d'un raccord 401 conforme à l'invention.

Dans ce mode, l'embout femelle 402 et l'embout mâle 403 sont chacun équipé d'un dispositif, respectivement 410 et 408, conforme à l'invention. Le dispositif de type soupape 410 est similaire au dispositif 10, tandis que le dispositif de type piston 408 est similaire au dispositif 308, décrits plus haut. Séparément, chaque dispositif 410 ou 408 est adapté pour assurer une fonction limiteur. Lorsque le raccord 401 est accouplé, les parties cylindriques qui s'étendent à travers l'orifice avant de chacune des dispositifs 410 et 408 se repoussent mutuellement, assurant ainsi la fonction de purge.

Quel que soit le mode de réalisation, le dispositif de décharge et de purge 10, 110, 210, 308, 408 ou 410 comprend une soupape ou un piston d'actionnement de soupape.

Egalement, quel que soit le mode de réalisation, la chambre 50 est définie dans l'enceinte 30, lorsque l'obturateur 60, 160, 260 ou 360 est dans sa position fermée C1, entre des parois 31 et 84 de l'enceinte 30, des parois du chapeau 80, l'obturateur, la première zone d'étanchéité Z92 ou Z292 de section S92 ou S292 située sur l'avant de l'enceinte et la deuxième zone d'étanchéité Z94 de section S94 située sur l'arrière de l'enceinte. Dans tous les cas, la première section d'étanchéité S92 ou S292 est plus petite que la seconde section d'étanchéité S94. En pratique, la section d'étanchéité S92 est délimitée entre le joint 92 et au moins une surface de l'obturateur. Ces surfaces d'étanchéité définies sur l'obturateur sont soit les surfaces 63 et 64, soit la surface 264, sur les exemples des figures. Dans le premier cas, la section S92 est définie par un diamètre maximal D64 et un diamètre minimal supérieur au diamètre D61, comme montré notamment à la figure 2. Dans le deuxième cas, la section S292 est définie par le diamètre D264, comme montré à la figure 8. En alternative, la section d'étanchéité S92 ou S292 peut être définie différemment sans sortir du cadre de l'invention.

Par ailleurs, le dispositif de décharge et de purge, l'embout de raccord et/ou le raccord peuvent être configurées différemment des figures sans sortir du cadre de l'invention. Les variantes qui suivent sont décrites en référence au raccord 1 et au dispositif 10, étant entendu qu'elles s'appliquent également aux autres modes de réalisation.

En variante non représentée, le dispositif 10 peut être intégré à tout raccord 1 prévu pour une application particulière, dans laquelle des moyens de décharge automatique et de purge volontaire sont avantageux.

Par exemple, l'invention peut être mise en oeuvre dans le cadre de l'alimentation de circuits hydrauliques de commande de la position de rouleaux de laminoir. Dans cette application industrielle, des pistons hydrauliques peuvent commander la position verticale d'un ensemble de rouleaux de laminoir. Deux problèmes parallèles de purge et de limitation de montée en pression peuvent alors se présenter, d'une part, lorsque la pression exercée par le poids des laminoirs comprime les pistons et le fluide, et par conséquent pressurise les soupapes de distribution rendant difficile voire impossible le raccordement du circuit à un circuit de purge et, d'autre part, lorsqu'une montée en pression anormale du circuit, due souvent à une élévation remarquable de température, n'est pas contrôlée et risque de causer un endommagement de l'installation.

Selon une autre variante non représentée, le corps 20 du dispositif 10 n'est pas monobloc. Dans ce cas, le chapeau 80 peut éventuellement être monté par l'arrière et non par l'avant.

Selon une autre variante non représentée, le corps 20 peut comporter plusieurs orifices arrières 36 répartis autour de l'axe X10.

Selon une autre variante non représentée, l'obturateur 60 comprend au moins un canal 72 radial ou axial, permettant de maintenir ou ramener la chambre 40 à la pression ambiante.

Selon une autre variante non représentée, les moyens d'étanchéité équipant le raccord 1, et notamment les joints 91, 92, 94, 95, peuvent être conformés ou agencés de manière différente sans sortir du cadre de l'invention.

En outre, les caractéristiques techniques des différents modes de réalisation peuvent être, en totalité ou pour certaines d'entre elles, combinées entre elles. Ainsi, le dispositif de décharge et de purge, l'embout de raccord et/ou le raccord peuvent être adaptés en termes de coût, de fonctionnalité et de performance.

## Revendications

1. Dispositif de décharge et de purge (10 ; 110 ; 210 ; 308 ; 408 ; 410), adapté pour limiter la pression d'un fluide (F) occupant le volume intérieur (V2) d'un embout de raccord (2 ; 102 ; 202 ; 303 ; 402 ; 403) relié à une canalisation et permettre l'abaissement de la pression résiduelle de ce fluide (F) à l'accouplement, le dispositif comprenant :
- une soupape ou un piston d'actionnement de soupape,
- une enceinte (30) intérieure débouchant sur une face avant (22) de la soupape ou du piston d'actionnement de soupape, cette face avant (22) étant destinée à coopérer avec un piston d'actionnement de soupape ou une soupape d'un embout de raccord (3 ; 302 ; 403 ; 402) complémentaire, et
- un obturateur (60 ; 160 ; 260 ; 360) mobile en translation (T1 ; T2) dans l'enceinte (30) suivant un axe central (X10) entre :
- une position fermée (C1) où l'obturateur obture la face avant (22) de l'enceinte (30) au niveau d'une première zone d'étanchéité (Z92 ; Z292) définissant une première section d'étanchéité (S92 ; S292) située du côté de la face avant (22) et
- une position ouverte (C2) où l'obturateur n'obture plus la face avant (22),
**caractérisé en ce que** le dispositif (10 ; 110 ; 210 ; 308 ; 408 ; 410) comprend également :
- une première chambre (50) définie lorsque l'obturateur (60 ; 160 ; 260 ; 360) est dans sa position fermée (C1), entre des parois (31, 84) de l'enceinte (30), l'obturateur (60 ; 160 ; 260 ; 360), la première zone d'étanchéité (Z92 ; Z292) et une deuxième zone d'étanchéité (Z94) définissant une seconde section d'étanchéité (S94) située à l'opposé de la face avant (22) par rapport à la première zone d'étanchéité (Z92 ; Z292),
- un passage de communication (36) entre cette première chambre (50) et le volume intérieur (V2) de l'embout de raccord (2 ; 102 ; 202 ; 303 ; 402 ; 403),
- des moyens (96) de rappel de l'obturateur vers sa position fermée (C1), et
- une seconde chambre (40) définie entre des parois (31, 37, 38, 39) de l'enceinte (30), la deuxième zone d'étanchéité (Z94) et l'obturateur (60 ; 160 ; 260 ; 360), cette deuxième chambre (40) étant isolée du volume intérieur (V2) de l'embout de raccord et de la première chambre (50),
et **en ce que** la première section d'étanchéité (S92 ; S292) est plus petite que la seconde section d'étanchéité (S94).

2. Dispositif de décharge et de purge (10 ; 110 ; 210 ; 308 ; 408 ; 410) selon la revendication 1, **caractérisé en ce que** l'obturateur (60 ; 160 ; 260 ; 360) comprend au moins un canal (72 ; 172 ; 272) débouchant de la partie avant (61) de l'obturateur (60 ; 160 ; 260 ; 360) et s'étendant à travers l'obturateur (60 ; 160 ; 260 ; 360) entre la seconde chambre (40) et l'extérieur de l'obturateur (60 ; 160 ; 260 ; 360).

3. Dispositif de décharge et de purge (10 ; 110 ; 210 ; 308 ; 408 ; 410) selon la revendication 2, **caractérisé en ce que** l'obturateur (60 ; 360) comporte deux canaux (72) débouchant de la partie avant (61) de l'obturateur (60 ; 360) radialement à l'axe central (X10) et s'étendant entre la seconde chambre (40) et l'extérieur de l'obturateur (60 ; 360).

4. Dispositif de décharge et de purge (10 ; 110 ; 210 ; 308 ; 408 ; 410) selon l'une des revendications précédentes, **caractérisé en ce que** la première zone d'étanchéité (Z92 ; Z292) comporte des moyens d'étanchéité (92 ; 292) qui sont fixes par rapport à la soupape ou au piston d'actionnement de soupape lorsque l'obturateur (60 ; 160 ; 260 ; 360) est mobile dans l'enceinte (30).

5. Dispositif de décharge et de purge (10 ; 110 ; 308 ; 408 ; 410) selon la revendication 4, **caractérisé en ce qu'**une surface externe tronconique (63) de l'obturateur (60 ; 160 ; 360) est maintenue en contact étanche contre les moyens d'étanchéité (92) dans la position fermée (C1) de l'obturateur (60 ; 160 ; 360).

6. Dispositif de décharge et de purge (10 ; 110 ; 308 ; 408 ; 410) selon l'une des revendications 4 ou 5, **caractérisé en ce que** les moyens d'étanchéité (92) sont fixés par adhérence à la soupape ou au piston d'actionnement de soupape.

7. Dispositif de décharge et de purge (210) selon la revendication 4, **caractérisé en ce qu'**une surface externe cylindrique (264) de l'obturateur (260) est maintenue en contact étanche radialement à l'axe central (X10) contre les moyens d'étanchéité (292) dans la position fermée (C1) de l'obturateur (260).

8. Dispositif de décharge et de purge (210) selon la revendication 7, **caractérisé en ce que** les moyens d'étanchéité (292) sont disposés dans une rainure radiale (284) centrée sur l'axe central (X10).

9. Dispositif de décharge et de purge (10 ; 110 ; 210 ; 308 ; 408 ; 410) selon l'une des revendications 7 ou 8, **caractérisé en ce que** les moyens d'étanchéité (292) comprennent un joint torique.

10. Dispositif de décharge et de purge (10 ; 110 ; 210 ; 308 ; 408 ; 410) selon l'une des revendications précédentes, **caractérisé en ce qu'il** comprend un chapeau (80) vissé dans une partie taraudée (33) de l'enceinte (30) au niveau de la face avant (22).

11. Dispositif de décharge et de purge (10 ; 110 ; 210 ; 308 ; 408 ; 410) selon la revendication 10, **caractérisé en ce que** la première zone d'étanchéité (Z92 ; Z292) comporte des moyens d'étanchéité (92 ; 292) solidaires du chapeau (80).

12. Dispositif de décharge et de purge (10 ; 110 ; 210 ; 308 ; 408 ; 410) selon l'une des revendications précédentes, **caractérisé en ce que** les moyens de rappel (96) de l'obturateur (60 ; 160 ; 260 ; 360) disposés dans la seconde chambre (40) comprennent un unique ressort ayant une première extrémité (97) en appui contre l'obturateur (60 ; 160 ; 260 ; 360) et une deuxième extrémité (98) en appui contre une paroi (39) de l'enceinte (30).

13. Embout de raccord (2 ; 102 ; 202 ; 303 ; 402 ; 403) adapté pour la circulation de fluides (F) sous pression, cet embout de raccord étant configuré comme un embout mâle ou femelle et adapté pour s'accoupler avec un autre embout de raccord (3 ; 302 ; 403 ; 402) complémentaire, inversement mâle ou femelle, **caractérisé en ce que** l'embout de raccord (2 ; 102 ; 202 ; 303 ; 402 ; 403) est équipé d'un dispositif de décharge et de purge (10 ; 110 ; 210 ; 308 ; 408 ; 410) selon l'une des revendications 1 à 12.

14. Raccord (1 ; 301 ; 401) adapté pour la circulation de fluides (F) sous pression, comprenant un embout de raccord femelle (2 ; 102 ; 202 ; 302 ; 402) relié à une première canalisation et un embout de raccord mâle (3 ; 303 ; 403) relié à une deuxième canalisation, **caractérisé en ce qu'**au moins un embout de raccord (2 ; 3 ; 102 ; 202 ; 303 ; 402 ; 403) parmi l'embout de raccord femelle et l'embout de raccord mâle est équipé d'un dispositif de décharge et de purge (10 ; 110 ; 210 ; 308 ; 408 ; 410) selon l'une des revendications 1 à 12.

## Patentansprüche

1. Vorrichtung zum Entlasten und Ablassen (10; 110; 210; 308; 408; 410), die zur Begrenzung des Drucks eines Fluids (F), das das Innenvolumen (V2) eines Kupplungselements (2; 102; 202; 303; 402; 403) einnimmt, das an eine Leitung angeschlossen ist, und zum Zulassen der Absenkung des Restdrucks dieses Fluids (F) an der Kupplung geeignet ist, wobei die Vorrichtung umfasst:
- ein Ventil oder einen Betätigungskolben eines Ventils,
- einen Innenraum (30), der sich zu einer vorderen Stirnfläche (22) des Ventils oder des Betätigungskolbens des Ventils öffnet, wobei diese vordere Stirnfläche (22) dazu dient, mit dem Betätigungskolben des Ventils oder einem Ventil eines komplementären Kupplungselements (3; 302; 403; 402) zusammenzuarbeiten, und
- ein Verschlusselement (60; 160; 260; 360), das in dem Raum (30) gemäß einer Mittelachse (X10) in Längsrichtung beweglich (T1; T2) ist zwischen:
- einer geschlossenen Stellung (C1), in der das Verschlusselement die vordere Stirnfläche (22) des Raums (30) an einer ersten Dichtungszone (Z92; Z292) verschließt, die einen ersten Dichtungsabschnitt (S92; S292) begrenzt, der an der Seite der vorderen Stirnfläche (22) angeordnet ist und
- einer offenen Stellung (C2), in der das Verschlusselement nicht die vordere Stirnfläche (22) verschließt,
**dadurch gekennzeichnet, dass** die Vorrichtung (10; 110; 210; 308; 408; 410) gleichfalls umfasst:
- eine erste Kammer (50), die, wenn das Verschlusselement (60; 160; 260; 360) in seiner ersten geschlossenen Stellung (C1) ist, zwischen den Wänden (31, 84) des Raums (30) begrenzt ist, wobei das Verschlusselement (60; 160; 260; 360), die erste Dichtungszone (Z92; Z292) und eine zweite Dichtungszone (Z94) einen zweiten Dichtungsabschnitt (S94) definieren, der entgegengesetzt zur vorderen Stirnfläche (22) in Bezug auf die erste Dichtungszone (Z92; Z292) angeordnet ist,
- einen Verbindungskanal (36) zwischen dieser ersten Kammer (50) und dem Innenvolumen (V2) des Kupplungselements (2; 102; 202; 303;402;403),
- Mittel (96) zur Rückstellung des Verschlusselements in seine geschlossene Stellung (C1) und
- eine zweite Kammer (40), die zwischen den Wänden (31, 37, 38, 39) des Raums (30) der zweiten Dichtungszone (Z94) und dem Verschlusselement (60; 160; 260; 360) begrenzt ist, wobei diese zweite Kammer (40) vom Innenvolumen (V2) des Kupplungselements und von der ersten Kammer (50) isoliert ist,
und dass der erste Dichtungsabschnitt (S92; S292) sehr viel kleiner als der zweite Dichtungsabschnitt (S94) ist.

2. Vorrichtung zum Entlasten und Ablassen (10; 110; 210; 308; 408; 410) nach Anspruch 1, **dadurch gekennzeichnet, dass** das Verschlusselement (60; 160; 260; 360) mindestens einen Kanal (72; 172; 272) aufweist, der von dem vorderen Teil (61) des Verschlusselements (60; 160; 260; 360) abzweigt und sich durch das Verschlusselement (60; 160; 260; 360) zwischen der zweiten Kammer (40) und dem Außenraum des Verschlusselements (60; 160; 260; 360) erstreckt.

3. Vorrichtung zum Entlasten und Ablassen (10; 110; 210; 308; 408; 410) nach Anspruch 2, **dadurch gekennzeichnet, dass** das Verschlusselement (60; 360) zwei Kanäle (72) aufweist, die von dem vorderen Teil (61) des Verschlusselements (60; 360) radial zur Mittelachse (X10) abzweigen und sich zwischen der zweiten Kammer (40) und dem Außenraum des Verschlusselements (60; 360) erstrecken.

4. Vorrichtung zum Entlasten und Ablassen (10; 110; 210; 308; 408; 410) nach einem der vorhergehenden Ansprüche, **dadurch gekennzeichnet, dass** die erste Dichtungszone (Z92; 7292) Dichtungsmittel (92; 292) aufweist, die in Bezug auf das Ventil oder den Betätigungskolben des Ventils fest sind, wenn das Verschlusselement (60; 160; 260; 360) in dem Raum (30) beweglich ist.

5. Vorrichtung zum Entlasten und Ablassen (10; 110; 308; 408; 410) nach Anspruch 4, **dadurch gekennzeichnet, dass** eine kegelstumpfförmige Außenfläche (63) des Verschlusselements (60; 160; 360) in dichtem Kontakt gegen die Dichtungsmittel (92) in der geschlossenen Position (C1) des Verschlusselements (60; 160; 360) gehalten ist.

6. Vorrichtung zum Entlasten und Ablassen (10; 110; 308; 408; 410) nach einem der Ansprüche 4 oder 5, **dadurch gekennzeichnet, dass** die Dichtungsmittel (92) kraftschlüssig mit dem Ventil oder dem Betätigungskolben des Ventils verbunden sind.

7. Vorrichtung zum Entlasten und Ablassen (210) nach Anspruch 4, **dadurch gekennzeichnet, dass** eine zylindrische Außenfläche (264) des Verschlusselements (260) in dichtem Kontakt (X10) gegen die Dichtungsmittel (292) in der geschlossenen Stellung (C1) des Verschlusselements (260) radial zur Mittelachse gehalten ist.

8. Vorrichtung zum Entlasten und Ablassen (210) nach Anspruch 7, **dadurch gekennzeichnet, dass** die Dichtungsmittel (292) in einer radialen Nut (284) angeordnet sind, die zur Mittelachse (X10) zentriert ist.

9. Vorrichtung zum Entlasten und Ablassen (10; 110; 210; 308; 408; 410) nach einem der Ansprüche 7 oder 8, **dadurch gekennzeichnet, dass** die Dichtungsmittel (292) eine torische Dichtung umfassen.

10. Vorrichtung zum Entlasten und Ablassen (10; 110; 210; 308; 408; 410) nach einem der vorhergehenden Ansprüche, **dadurch gekennzeichnet, dass** sie eine in einen Gewindebereich (33) des Raums (30) an der vorderen Stirnfläche (22) geschraubte Kappe (80) umfasst.

11. Vorrichtung zum Entlasten und Ablassen (10; 110; 210; 308; 408; 410) nach Anspruch 10, **dadurch gekennzeichnet, dass** die erste Dichtungszone (Z92; Z292) Dichtungsmittel (92; 292), die mit der Kappe (80) verbunden sind, aufweist.

12. Vorrichtung zum Entlasten und Ablassen (10; 110; 210; 308; 408; 410) nach einem der vorhergehenden Ansprüche, **dadurch gekennzeichnet, dass** die Mittel (96) zur Rückstellung des Verschlusselements (60; 160; 260; 360), die in der zweiten Kammer (40) angeordnet sind, eine einzige Feder umfassen, die ein erstes Ende (97), das sich gegen das Verschlusselement (60; 160; 260; 360) abstützt, und ein zweites Ende (98), das sich gegen die Wand (39) des Raums (30) abstützt, aufweist.

13. Kupplungselement (2; 102; 202; 303; 402; 303), geignet für die Zirkulation von unter Druck stehenden Fluiden (F), wobei dieses Kupplungselement als Einsteckelement oder Aufnahmeelement ausgebildet ist und angepasst ist, mit einem anderen komplementären Kupplungselement (3; 302; 403; 402), das in umgekehrter Weise ein Aufnahmeelement oder ein Einsteckelement ist, gekoppelt zu werden, **dadurch gekennzeichnet, dass** das Kupplungselement (2; 102; 202; 303; 402; 403) mit einer Vorrichtung zum Entlasten und Ablassen (10; 110; 210; 308; 408; 410) nach einem der Ansprüche 1 bis 12 ausgerüstet ist.

14. Kupplung (1; 301; 401), geeignet für die Zirkulation von unter Druck stehenden Fluiden (F), die ein an eine erste Leitung angeschlossenes Kupplungsaufnahmeelement (2; 102; 202; 302; 402) und ein an eine zweite Leitung angeschlossenes Kupplungseinsteckelement (3; 303; 403) umfasst, **dadurch gekennzeichnet, dass** mindestens eines der Kupplungselemente (2; 3; 102; 202 303; 402; 403) Kupplungsaufnahmeelement und Kupplungseinsteckelement mit einer Vorrichtung zum Entlasten und Ablassen (10; 110; 210; 308; 408; 410) nach einem der Ansprüche 1 bis 12 ausgerüstet ist.

## Claims

1. A discharge and purging device (10; 110; 210; 308; 408; 410), adapted for limiting the pressure of a fluid (F) occupying the inner volume (V2) of a connecting endpiece (2; 102; 202; 303; 402; 403) connected to a duct and allowing lowering of the residual pressure of this fluid (F) upon coupling, the device comprising:
- a valve or a valve actuation piston,
- an inner enclosure (30) opening out on a front face (22) of the valve or of the valve actuation piston, this front face (22) being intended for cooperating with a valve actuation piston or a valve of an additional connecting endpiece (3; 302; 403; 402), and
- an obturator (60; 160; 260; 360) moveable in translation (T1; T2) in the enclosure (30) along a central axis (X10) between:
- a closed position (C1) where the obturator obturates the front face (22) of the enclosure (30) at a first seal area (Z92: Z292) defining a first seal section (S92: S292) located on the side of the front face (22) and
- an open position (C2) where the obturator no longer obturates the front face (22), **characterized in that** the device (10; 110; 210; 308; 408; 410) also comprises:
- a first chamber (50) defined when the obturator (60; 160; 260; 360) is in its closed position (C2), between walls (31, 84) of the enclosure (30), the obturator (60; 160; 260; 360), the first seal area (Z92, Z292) and a second seal area (Z94) define a second seal section (S94) located opposite the front face (22) relatively to the first seal area (Z92; Z292),
- a communication passage (36) between this first chamber (50) and the inner volume (V2) of the connecting endpiece (2: 102; 202; 303; 402; 403),
- means (96) for returning the obturator to its closed position (C1), and
- a second chamber (40) defined between walls (31, 37, 38, 39) of the enclosure (30), the second seal area (Z94) and the obturator (60; 160; 260; 360) this second chamber (40) being isolated from the inner volume (V2) of the connecting endpiece and from the first chamber (50),
and **in that** the first seal section (S92; S292) is smaller than the second seal section (S94).

2. The discharge and purging device (10; 110; 210; 308; 408; 410) according to claim 1, **characterized in that** the obturator (60; 160; 260; 360) comprises at least one channel (72; 172; 272) opening out from the front portion (61) of the obturator (60; 160; 260; 360) and extending through the obturator (60; 160; 260; 360) between the second chamber (40) and the outside of the obturator (60; 160; 260; 360.

3. The discharge and purging device (10; 110; 210; 308; 408; 410) according to claim 2, **characterized in that** the obturator (60; 360) includes two channels (72) opening out from the front portion (61) of the obturator (60: 360) radially to the central axis (X10) and extending between the second chamber (40) and the outside of the obturator (60; 360).

4. The discharge and purging device (10; 110; 210; 308; 408; 410) according to any one of the preceding claims, **characterized in that** the first seal area (Z92; Z292) includes sealing means (92; 292) which are fixed relatively to the valve or to the valve actuation piston when the obturator (60; 160; 260; 360) is moveable in the enclosure (30).

5. The discharge and purging device (10; 110; 210; 308; 408; 410) according to claim 4, **characterized in that** a frusto-conical external surface (63) of the obturator (60; 160; 360) is maintained in leak-proof contact against the sealing means (92) in the closed position (C1) of the obturator (60; 160; 360).

6. The discharge and purging device (10; 110; 210; 308; 408; 410) according to any one of claims 4 or 5, **characterized in that** the sealing means (92) are fixed by adhesion to the valve or valve actuation piston.

7. The discharge and purging device (210) according to claim 4, **characterized in that** a cylindrical external surface (264) of the obturator (260) is maintained in leak-proof contact radially to the central axis (X10) against the sealing means (292) in the closed position (C1) of the obturator (260).

8. The discharge and purging device (210) according to claim 7, **characterized in that** the sealing means (292) are positioned in a radial groove (284) centered on the central axis (X10).

9. The discharge and purging device (10; 110; 210; 308; 408; 410) according to any one of claims 7 or 8, **characterized in that** the sealing means (292) comprise an O-ring gasket.

10. The discharge and purging device (10; 110; 210; 308; 408; 410) according to any one of the preceding claims, **characterized in that** it comprises a cap (80) screwed into a tapped portion (33) of the enclosure (30) at the front face (22).

11. The discharge and purging device (10; 110; 210; 308; 408; 410) according to claim 10, **characterized in that** the first seal area (Z92: Z292) includes sealing means (92: 292) secured to the cap (80).

12. The discharge and purging device (10; 110; 210; 308; 408; 410) according to any one of the preceding claims, **characterized in that** the means (96) for returning the obturator (60; 160; 260; 360) positioned in the second chamber (40) comprise a single spring having a first end (97) bearing against the obturator (60; 160; 260; 360) and a second end (98) bearing against a wall (39) of the enclosure (30).

13. A connecting endpiece (2; 102; 202; 303; 402; 403) adapted for the circulation of pressurized fluids (F), this connecting endpiece being configured like a male or female endpiece and adapted for coupling with another additional connecting endpiece (3; 302; 403; 402) either male or female, **characterized in that** the connecting endpiece (2; 102; 202; 303; 402; 403) is equipped with a discharge and purging device (10; 110; 210; 308; 408; 410) according to one of claims 1 to 12.

14. A connector (1; 301; 401) adapted for circulation of pressurized fluids (F), comprising a female connecting endpiece (2; 102; 202; 302; 402) connected to a first duct and a male connecting endpiece (3; 303; 403) connected to a second duct, **characterized in that** at least one connecting endpiece (2; 3; 102; 202; 303; 402; 403) from the female connecting endpiece and from the male connecting endpiece is equipped with a discharge and purging device (10; 110; 210; 308; 408; 410) according to one of claims 1 to 12.
